# EUROPÄISCHE PATENTSCHRIFT

(11) **EP 1 779 972 B1**
(45) Veröffentlichungstag und Bekanntmachung des Hinweises auf die Patenterteilung: **17.12.2008**
(21) Anmeldenummer: 06122777.3
(22) Anmeldetag: 23.10.2006
(51) Int. Cl.: B24B 39/04

(54) **Verfahren und Vorrichtung zum Verfestigen von Kurbelwellen**
Method and apparatus for hardening crankshafts
Procédé et dispositif de galetage de vilbrequins

(43) Veröffentlichungstag der Anmeldung: 02.05.2007
(73) Patentinhaber: Reuss, Cornelius, Monte Carlo House (MC)
(72) Erfinder: Reuss, Cornelius, Monte Carlo House (MC)
(74) Vertreter: Vossius & Partner

(56) Entgegenhaltungen:
- EP-B1- 0 213 256

## Beschreibung

Die vorliegende Erfindung betrifft ein Verfahren und eine Vorrichtung zum Festwalzen von Kurbelwellen an den Übergangsradien von Lagerzapfen, gemäß dem Oberbegriff des Anspruchs 1 bzw 8. Ein solches Verfahren bzw Vorrichtung ist aus EP 213 256 B bekannt.

Das Festwalzen ist ein Verfahren zur Randschichtverfestigung auf mechanischem Wege. Die Wirkung des Festwalzens basiert insbesondere darauf, dass Druckeigenspannungen in der Randschicht des bearbeiteten Werkstücks eingebracht werden, dass eine Festigkeitssteigerung durch Umformung erreicht wird, sowie dass eine Glättung der Oberfläche und Beseitigung von Mikrokerben gewährleistet wird. Insbesondere die Kombination dieser drei physikalischen Effekte macht das Festwalzen wirksam.

Beim Festwalzen wird eine definierte und gegebenenfalls variable Festwalzkraft über Festwalzrollen, die als Teil eines Festwalzwerkzeugs ausgebildet sind, in das zu bearbeitende Werkstück eingebracht. Hierzu rollen die Festwalzrollen auf dem rotierenden Werkstück ab.

Vorzugsweise erfolgt das Festwalzen im Elastizitätsbereich der Young-Kurve. Besonders bevorzugt erfolgt das Festwalzen durch wiederholte Ausführungen einzelner Festwalzvorgänge. Das Festwalzen hat sich als vorteilhaft gegenüber der Oberflächenbehandlung durch beispielsweise Wärmebehandlung oder Laserbehandlung erwiesen. So bewirkt das Festwalzen eine wesentliche erhöhte Dauerfestigkeit der bearbeiteten Werkstücke gegenüber konventionellen Oberflächenbehandlungen und bewirkt zudem eine verbesserte Torsionsfestigkeit, was mit den konventionellen Oberflächenbehandlungen nicht oder nur unzureichend möglich ist.

Durch das Festwalzen kann insbesondere einer Materialermüdung durch zyklisch schwellende oder wechselnde mechanische Belastungen, einer Kerbwirkung durch Querschnittsänderungen, scharfkantige Übergänge und Bearbeitungsriefen, einer Kerbwirkung durch Eigenspannungen aus dem Fertigungsprozess und Spannungssprüngen durch Einleitung äußerer Kräfte begegnet werden. Derartige Probleme können bei einer Vielzahl von technischen Geräten, wie beispielsweise im allgemeinen Maschinenbau, im Motorenbau, im Getriebebau, Maschinen- Straßen- Wasser- und Luftfahrzeugen etc. auftreten. Insbesondere wird das Festwalzen zur Randschichtverfestigung kritischer Bereiche von Kurbelwellen, wie sie beispielsweise im KFZ Bereich zum Einsatz kommen, verwendet.

So stellt das Festwalzen eine Fertigungstcchnologie zur Verbesserung der Betriebsfestigkeit hochbelasteter Kurbelwellen dar. Hierbei dient es insbesondere der Stabilitätsverbesserung von Kurbelwellen, die somit beispielsweise in leistungsgesteigerten Motoren zum Einsatz kommen können. Kurbelwellen mit verbesserter Betriebsfähigkeit erlauben auch die Ausbildung kompakterer Motoren mit hohen Leistungsdichten. Durch das Festwalzen werden insbesondere Druckeigenspannungen in die Hohlkehlen der Kurbelwellen eingebracht, die vorzugsweise zur Erhöhung der Dauerschwingfestigkeit der Kurbelwellen und damit zu einer signifikanten Lebensdauersteigerung führen.

Entsprechende Verfahren sowie Vorrichtungen zum Durchführen solcher Verfahren sind im Stand der Technik bekannt.

So betrifft die DE-C-3037688 ein Verfahren zum Festwalzen von Kurbelwellen an Übergangsradien von Lagerzapfen, wobei über einen Drehwinkel des Werkstücks von 360° mit unterschiedlichen Walzkräften festgewalzt wird. Hierzu kommen Festwalzrollen zum Einsatz, die sich einerseits in den Hohlkehlen des Kurbelzapfens und andererseits in den Laufrinnen je eines Laufrings abstützen, die auf Bolzen über Wälzlager gelagert sind.

Die EP-B-0215179 betrifft eine Festwalzmaschine bzw. Glattwalzmaschine zum Walzen von mindestens den an einem Werkstück exzentrisch angeordneten Flächen. Die Maschine weist rollenförmige Stützelemente und Walzelemente auf, die zur Aufbringung der Kräfte auf das Werkstück auf eben diesem abrollen.

Die EP-B-0213526 betrifft eine Einrichtung zum Fest- bzw. Glattwalzen von Kurbelwellen mit mindestens einem beweglichen Walzgerät, welch jedes einen Werkzeugträger mit mindestens einem Walzelement und einem Werkzeugträger mit mindestens einem Stützelement enthält, sowie mindestens einem weiteren Walzgerät, wobei die Walzgeräte von einem auf einem Schlitten aufsetzbaren Ständer getragen werden. Die Walzelemente bzw. Stützelemente gemäß der EP-B-0213256 sind rollenförmig ausgebildet.

Gemäß den im Stand der Technik bekannten Verfahren, bilden jeweils zwei rollenförmige Walzelemente mit einer Stützrolle eine Festwalzeinheit. Das heißt, zwei Walzrollen, die auf dem Werkstück abrollen und Kräfte in dieses einbringen, werden gemeinsam durch eine Stützrolle gestützt, über die die Walzkräfte in die Walzrollen eingebracht werden. Hierbei erweist es sich insbesondere als nachteilig, dass beispielsweise bei Verschleiß lediglich einer der Walzrollen auch ein entsprechender Verschleiß der Stützrolle bedingt wird, was den Austausch einer vollständigen Einheit erforderlich macht.

Auch führen Ungenauigkeiten im Werkstück zu Kräfteungleichgewichten in der Festwalzeinheit, da die Walzkräftemomente über die beiden Walzrollen in die Stützrolle eingeleitet werden. Derartige Ungenauigkeiten führen beispielsweise zu einer hohen Kraft, die über eine Festwalzrolle in die Stützrolle eingeleitet wird, wohingegen die zweite Festwalzrolle lediglich eine geringere Kraft an einer anderen Stelle in die Stützrolle einleitet. Eine derartige unterschiedliche Belastung der Stützrolle macht das Aufbringen hoher Ausgleichskräfte erforderlich. Diese wiederum erhöhen den Verschleiß und verringern die Lebensdauer der Festwalzeinheit.

Insbesondere besteht die Gefahr, dass die Beschädigung einer Festwalzrolle zum Stillstand oder Verklemmen einer Festwalzeinheit führt. Ferner besteht die Gefahr, dass eine beschädigte Stelle einer Festwalzrolle durch ihre rotationssymmetrische Ausbildung wiederholt mit der zu bearbeitenden Kurbelwelle in Kontakt kommt. Dies führt zu einer kontinuierlichen wiederholt eingebrachten Schadstelle auf der Kurbelwelle. Durch derartige Beschädigungen der Festwalzrolle bzw. der Festwalzrollen besteht die Gefahr, dass keine Eigenspannungen, wie vorstehend beschrieben in die Kurbelwelle eingebracht werden bzw. das bereits eingebrachte Eigenspannungen wieder verloren gehen. Hinzu kommt die mögliche Beschädigung des Werkstücks.

Auch kann der Zeitpunkt des Verschleißes einer Festwalzrolle über ein kritisches Niveau hinaus während des Betriebs der Einheit nur unzureichend erkannt werden kann.

Eine zufriedenstellende und zuverlässige Bearbeitung von Kurbelwellen ist somit mit dem im Stand der Technik bekannten Verfahren nicht oder nicht ausreichend möglich. Dies gilt insbesondere hinsichtlich der hohen Kosten, die durch die beschriebenen Defekte in der Massenfertigung von Kurbelwellen im Automobilbereich hervorgerufen werden.

Es ist somit eine Aufgabe der vorliegenden Erfindung, die Nachteile des Standes der Technik zu überwinden. Insbesondere ist es eine Aufgabe der vorliegenden Erfindung, ein verbessertes Walzelement, eine verbesserte Vorrichtung sowie ein verbessertes Verfahren zum Festwalzen der Übergangsradien von Kurbelwellen bereitzustellen.

Die Aufgabe/n der vorliegenden Erfindung wird/werden durch das Walzelement, die Vorrichtung sowie das Verfahren gemäß den Patentansprüchen gelöst.

Die vorliegende Erfindung betrifft ein Verfahren zum Festwalzen der Übergangsradien von Kurbelwellen gemäß Anspruch 1. Hierbei wird mindestens ein Walzelement zum Einbringen mindestens einer Kraft in das Werkstück sowie mindestens ein Stützelement zum Stützen des Werkstücks gegen eine durch das Walzelement eingebrachte Festwalzkraft bereitgestellt. Ferner werden das mindestens eine Walzelement und/oder das mindestens eine Stützelement derart bewegt, dass ein zwischen ihnen angeordnetes Werkstück und das mindestens eine Walzelement relativ zueinander eine Bewegung ausführen, die eine Linearkomponente aufweist. Vorzugsweise umfasst die Relativbewegung zwischen dem Werkstück und dem mindestens einem Walzelement im Wesentlichen eine Linearkomponente bzw. besteht im Wesentlichen aus einer Linearkomponente. Entlang dieser Linearkomponente bewegen sich das Werkstück und das mindestens eine Walzelement vorzugsweise mit unterschiedlicher Geschwindigkeit in die gleich Richtung.

Vorzugsweise werden auch bzw. alternativ das mindestens eine Walzelement und/oder das mindestens eine Stützelement derart bewegt, dass das mindestens eine Stützelement und das mindestens eine Walzelement relativ zueinander eine Bewegung ausführen, die eine Linearkomponente aufweist. Vorzugsweise umfasst die Relativbewegung zwischen dem mindestens einem Stützelement und dem mindestens einem Walzelement im Wesentlichen eine Linearkomponente bzw. besteht im Wesentlichen aus einer Linearkomponente. Entlang dieser Linearkomponente bewegen sich das mindestens eine Stützelement und das mindestens eine Walzelement vorzugsweise in entgegengesetzte Richtungen.

Bei dem erfindungsgemäßen Verfahren zum Festwalzen der Übergangsradien von Kurbelwellen führt das zwischen dem mindestens einen Stützelement und dem mindesten einen Walzelement angeordnete Werkstück eine Bewegung mit einer Rotationskomponente aus. Gemäß einer bevorzugten Ausführungsform führt das Werkstück eine Bewegung mit einer Rotationskomponente und einer Linearkomponente aus. Gemäß dem erfindungsgemäßen Verfahren bewegt sich das mindestens eine Walzelement und/oder das mindestens eine Stützelement entlang eines Weges mit einer Linearkomponente und einer Rotationskomponente, wobei die Linearkomponente vorzugsweise größer und besonders bevorzugt wesentlich größer ist als die Rotationskomponente.

Vorzugsweise rotieren das mindestens eine Walzelement und/oder das mindestens eine Stützelement nicht, insbesondere nicht, insbesondere nicht um die eigene Achse.

Weiterhin betrifft die vorliegende Erfindung ein Walzelement zum Festwalzen der Übergangsradien von Kurbelwellen. Ein derartiges Walzelement ist vorzugsweise als Walzelement in dem erfindungsgemäßen Verfahren zum Festwalzen der Übergangsradien von Kurbelwellen geeignet bzw. ausgebildet. Das erfindungsgemäße Walzelement weist eine im Wesentlichen geradlinige Kontaktfläche zum Einbringen mindestens einer Festwalzkraft in eine Kurbelwelle auf. Hierzu ist das Walzelement vorzugsweise länglich, also sich in Richtung einer Längsachse erstreckend, ausgebildet. Vorzugsweise erstreckt sich die im Wesentlichen geradlinige Kontaktfläche des Walzelements in einer Längsrichtung des Walzelements, besonders bevorzugt in Wesentlichen parallel zur Längsachse des Walzelements.

Vorzugsweise ist die im Wesentlichen geradlinige Kontaktfläche des Walzelements zumindest teilweise, vorzugsweise leicht, konkav und/oder konvex ausgebildet und zwar in der Ebene, in der die Längsachse des Walzelements liegt und die die Kontaktfläche des Walzelements, vorzugsweise im Wesentlichen senkrecht, schneidet.

Vorzugsweise ist die Kontaktfläche des Walzelements nicht kreisförmig ausgebildet.

Vorzugsweise ist das Walzelement bzw. die Kontaktfläche des Walzelements nicht rollenförmig und/oder nicht rotationssymmetrisch ausgebildet.

Die Kontaktfläche des Walzelements hat vorzugsweise eine Länge von/zwischen etwa 0,1m bis/und etwa 5m, mit vorzugsweise von/zwischen etwa 0,3m bis/und etwa 2m, besonders bevorzugt von/zwischen etwa 0,5m bis/von etwa 1,5m und mehr bevorzugt von etwa 1m.

Vorzugsweise weist das erfindungsgemäße Walzelement eine Kontaktfläche mit einem Festwalzradius von/zwischen etwa 0,5mm bis/etwa 5mm, vorzugsweise von/zwischen etwa 1mm bis/und etwa 3mm und besonders bevorzugt von/zwischen etwa 1,5mm bis/und etwa 2mm auf. Dieser Festwalzradius liegt vorzugsweise in einer Ebene, die sich im Wesentlichen etwa senkrecht zur Längsachse des Walzelements sowie im Wesentlichen etwa senkrecht zur Kontaktfläche des Walzelements erstreckt.

Weiterhin betrifft die vorliegende Erfindung eine Vorrichtung zum Festwalzen der Übergangsradien von Kurbelwellen gemäß dem erfindungsgemäßen Verfahren. Ferner betrifft die vorliegende Erfindung eine Vorrichtung zum Festwalzen der Übergangsradien von Kurbelwellen mit einem erfindungsgemäßen Walzelement.

Eine erfindungsgemäße Vorrichtung zum Festwalzen der Übergangsradien für Kurbelwellen weist vorzugsweise mindestens ein Walzelement zum Einbringen mindestens einer Festwalzkraft in das Werkstück sowie mindestens ein Stützelement zum Stützen des Werkstücks gegen die durch das Walzelement eingebrachte Kraft auf. Das mindestens eine Walzelement und/oder das mindestens eine Stützelement sind hierbei vorzugsweise derart ausgebildet, dass es eine im Wesentlichen geradlinige Kontaktfläche zum Einbringen der mindestens einen Festwalzkraft in die Kurbelwelle bzw. zum Stützen des Werkstücks aufweist.

Vorzugsweise weist die erfindungsgemäße Vorrichtung Mittel auf, um zwischen dem mindestens einen Walzelement und dem Werkstück eine Relativbewegung mit einer Linearkomponente zu erzeugen. Vorzugsweise weist die Vorrichtung auch Mittel auf, um zwischen dem mindesten einen Walzelement und dem mindestens einen Stützelement eine Relativbewegung mit einer Linearkomponente zu erzeugen.

Vorzugsweise weist die vorliegende Vorrichtung hierzu Mitteil auf, die ausgebildet sind eine derartige Relativbewegung zu erzeugen, die im Wesentlichen eine Linearkomponente umfasst bzw. im Wesentlichen aus einer Linearkomponente besteht. Weiterhin weist die erfindungsgemäße Vorrichtung vorzugsweise Mittel auf, um das mindestens eine Walzelement und das mindestens eine Stützelement entlang einer Linearkomponente relativ zueinander zu bewegen.

Die Vorrichtung ist vorzugsweise derart ausgebildet, dass ein zwischen dem mindestens einen Walzelement und dem mindestens einen Stützelement angeordnetes Werkstück eine Bewegung mit einer Rotationskomponente ausführt. Weiterhin ist die erfindungsgemäße Vorrichtung vorzugsweise derart ausgebildet, dass ein zwischen dem mindestens einen Walzelement und dem mindestens einen Stützelement angeordnetes Werkstück eine Bewegung mit einer Rotationskomponente und einer Linearkomponente ausführt.

Die erfindungsgemäße Vorrichtung weist ferner bevorzugt Mitteil auf, um das mindestens eine Walzelement und/oder das mindestens eine Stützelement entlang eines Weges mit einer Linearkomponente und einer Rotationskomponente zu bewegen, wobei die Linearkomponente vorzugsweise größer und besonders bevorzugt wesentlich größer ist als die Rotationskomponente. Gemäß einer bevorzugten Ausführungsform ist das mindestens eine Walzelement und/oder das mindestens eine Stützelement nicht, insbesondere nicht um die eigene Achse, rotierbar.

Die vorliegende Erfindung erweist sich insbesondere dahingehend als vorteilhaft, dass sie eine optimierte und zuverlässige Krafteinleitung in das Werkstück ermöglicht. Ferner minimiert sie vorzugsweise das Verschleißrisiko von Werkzeug und Werkstück. Zudem erlaubt sie bevorzugt eine variable Krafteinleitung in das Werkstück sowie eine Bearbeitung auch komplexer Werkstück- bzw. Kurbelwellengeometrien, wie beispielsweise Kurbelwellen für V-Motoren mit enger V-Anordnung (etwa der V-10 von Volkswagen). Zudem erlaubt die vorliegende Erfindung vorzugsweise eine unabhängige Einbringung und/oder Regelung der Wälzkraft eines einzelnen Werkzeugs bzw. Walzelements. So kann vorzugsweise nicht nur eine variable bzw. veränderliche Kraft über den Bearbeitungszyklus erreicht werden sondern auch eine individuelle Krafteinstellung für jeden zu bearbeitenden Übergangsradius erfolgen.

Vorteilhaft erweist sich vorzugsweise weiterhin das Ermöglichen einer allein einseitigen Bearbeitung, wie beispielsweise der Bearbeitung lediglich einer Seite eines Lagersitzes unabhängig von der anderen Lagersitzseite. Auch die Bearbeitung engerer Lager wird durch die vorliegende Erfindung vorzugsweise ermöglicht. Die vorliegende Erfindung erlaubt vorzugsweise einen guten Ausgleich bzw. eine optimierte Bearbeitung ungenau gefräster Übergangsradien.

Vorteilhaft ist weiterhin vorzugsweise, daß das Walzelement durch die geradlinige Ausbildung eine wesentlich längere Kontaktfläche aufweist, von der jede Stelle im Einsatz nur Begrenzt mit dem Werkstück in Kontakt kommt. Eine Beschädigung im Werkzeug wird somit nicht und nur geringfügig auf das Werkstück übertragen. Hierbei ist zu beachten, dass im Stand der Technik ein Defekt der Festwalzrolle von 2/10 des Sollmaßes als Grenze für eine zuverlässige Bearbeitung beim Festwalzvorgang gilt. Größere Defekte führen zu einer Materialverschiebung auf dem Werkstück bis hin zum Stehen bzw. Festsetzen der Festwalzrolle. Dies führt zu einem Unbrauchbarwerden des Werkstücks sowie des Werkzeugs und macht umfangreichere Reparaturen und Austauscharbeiten notwendig. Diese Nachteile werden mit der vorliegenden Erfindung vorzugsweise überwunden.

Gemäß einer bevorzugten erfindungsgemäßen Ausführungsform wird für jeden Lagersitz lediglich ein Stützelement eingesetzt, dass gemäß einer bevorzugten Ausführungsform ebenfalls als längliches oder lineares Stützelement ausgebildet ist, wobei es vorzugsweise eine Breite entsprechend der Kurbelwellenlagerbreite aufweist. Gemäß einer weiteren bevorzugten Ausführungsform werden für jeden Lagersitz zwei rotationssymmetrische bzw. kreisförmige Stützelemente eingesetzt, die drehbar durch einen Rollenstützkopf gelagert werden und die ebenfalls vorzugsweise eine Breite entsprechend der Lagersitzbreite aufweisen.

Zur Erzielung der Relativbewegung zwischen Walzelement und Werkstück bewegt sich vorzugsweise lediglich das Stützelement oder das Walzelement. Vorzugsweise wird die Relativbewegung zwischen Walzelement und Werkstück lediglich durch eine Bewegung des Stützelements bewirkt. Da die Breite des Lagersitzes durch die Krafteinwirkung während der Festwalzbearbeitung um etwa 1/20 bis etwa 1/10 verbreitert wird, ergibt sich eine Winkeländerung des Werkzeugs. Eine entsprechende Einstellung des Werkzeugs ist bei einem stehenden Werkzeug besser zu lösen, so dass eine Bewegungseinleitung allein durch die Stützrolle vorteilhaft ist. Insbesondere verbreitert sich jeder Lagersitz durch das Festwalzen um etwa 0,05mm bis etwa 0,1mm. Bei einer Kurbelwelle für einen Vier-Zylinder Motor, also eine Kurbelwelle mit acht Lagersitzen, bedeutet dies eine Verbreiterung von etwa 0,4mm bis etwa 1mm für die gesamte Kurbelwelle.

Wie Eingangs geschildert ist es auch möglich, die Festwalzbearbeitung derart durchzuführen, dass lediglich eine Rotationsbewegung des Werkstücks erfolgt, oder dass eine Kombination aus einer Rotationsbewegung und einer Linearbewegung des Werkstücks erfolgt. Hierbei erweist sich die Bearbeitung mit einer Linearbewegung des Werkstücks vorzugsweise dahingehend als vorteilhaft, dass während der Bearbeitung der Schlag der Kurbelwelle besser messbar ist. Dies ermöglicht eine Echtzeiteinstellung der Walzkräfte, um den Schlag zu minimieren.

Die vorliegende Erfindung wird im Zusammenhang des Festwalzens der Übergangsradien von Kurbelwellen beschrieben. Es versteht sich jedoch, daß die Erfindung nicht auf diesen Anwendungsfall beschränkt ist.

Im Folgenden wird die vorliegende Erfindung anhand bevorzugter Ausführungsformen beispielhaft unter Bezugnahme auf die beigefügten Zeichnungen beschrieben. Hierbei bezieht sich die nachfolgende beispielhafte Beschreibung, ebenso wie die vorangegangene, auf alle Bereiche der vorliegenden Erfindung, insbesondere das erfindungsgemäße Verfahren, die erfindungsgemäße Vorrichtung sowie das erfindungsgemäße Walzelement gleichermaßen, ohne das explizit zwischen diesen unterschieden wird. Es zeigen:
- Figur 1: eine schematische Darstellung eines Ausschnitts einer Draufsicht auf ein erfindungsgemäßes Walzelement in einer erfindungsgemäßen Vorrichtung beim Walzen eines Kurbelwellenlagersitzes;
- Figur 2: eine vergrößerte schematische Darstellung eines Ausschnitts einer Draufsicht auf zwei erfindungsgemäße Walzelemente bei der Bearbeitung zweier gegenüberliegender Übergangsradien eines Kurbelwellenlagerzapfens;
- Figur 3: eine schematischen Darstellung eines Ausschnitt einer Seitenansicht auf eine erfindungs gemäße Vorrichtung mit einem erfindungsgemäßen Werkzeug sowie einem Stützelement während der Bearbeitung einer Kurbelwelle;
- Figur 4: eine schematischen Darstellung eines Ausschnitt einer Seitenansicht auf eine erfindungsgemäße Vorrichtung mit einem erfindungsgemäßen Werkzeug sowie zweier Stützelemente während der Bearbeitung einer Kurbelwelle;
- Figur 5: eine Seitenansicht eines bevorzugten erfindungsgemäßen Werkzeugs, und
- Figur 6: eine vergrößerte schematische Darstellung eines Ausschnitts einer Draufsicht auf ein erfindungsgemäßes Walzelement während der Bearbeitung einer Kurbelwelle.

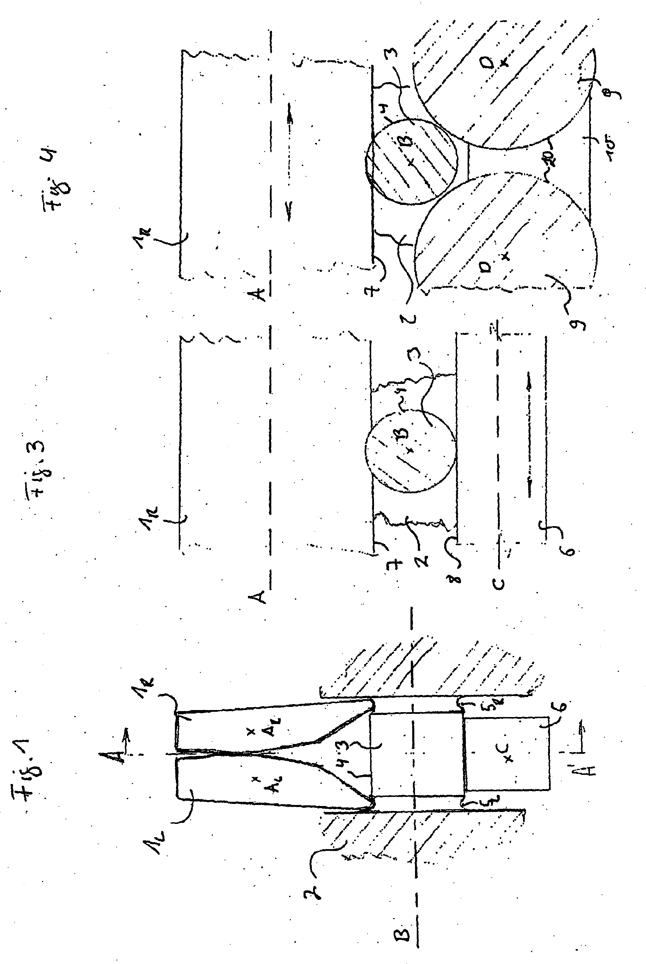

Figur 1 zeigt eine Draufsicht auf zwei erfindungsgemäße Werkzeuge bzw. Walzelemente 1 zur Randschichtverfestigung und insbesondere zum Festwalzen, vorzugsweise von Kurbelwellen 2 bzw. der Übergangsradien 5 von Lagerzapfen 3 von Kurbelwellen 2 (hier nur im Ausschnitt dargestellt). In Figur 1 dargestellt sind zwei Walzelemente 1, nämlich eines zur Bearbeitung eines in der Zeichnung linken Übergangsradius 5_{L} (Walzelement 1_{L}) und eines zur Bearbeitung eines in der Zeichnung rechts dargestellten Übergangsradius 5_{R} (Walzelement 1_{R}). Die Kurbelwelle 2 weist einen Lagerzapfen 3 auf, mit einem Lagersitz 4 sowie am Übergang zum verbleibenden Bereich der Kurbelwelle 2 vorgesehenen Übergangsradien 5, von denen im einzelnen der in der Zeichnung linke als Übergangsradius 5_{L} und der in der Zeichnung rechte als Übergangsradius 5_{R} bezeichnet wird.

Ferner dargestellt ist ein Stützelement 6 zum Abstützen des Werkstücks 2 gegen die durch das mindestens eine Walzelement 1 eingebrachte Festwalzkraft.

Figur 3 zeigt eine Teilschnittansicht der schematischen Darstellung gemäß Figur 1 entlang des Schnitts A-A'. Figur 4 zeigt eine Darstellung einer alternativen bevorzugten Ausführungsform, im Wesentlichen entsprechend der in Figur 3 dargestellten, wobei das Stützelement 6 durch zwei rollenförmige Stützelemente 9 gebildet wird, die auf einem Rollenstützkopf 10 angeordnet sind.

Wie dargestellt, weist ein erfindungsgemäßes Walzelement 1 eine Kontaktfläche 7 auf, die im Wesentlichen geradlinig ausgebildet ist. Die Kontaktfläche 7 dient dem Einbringen mindestens einer Festwalzkraft in ein Werkstück, hier an einem Übergangsradius 5 in eine Kurbelwelle 2. Die Kontaktfläche 7 ist vorzugsweise im Wesentlichen geradlinig ausgebildet und erstreckt sich weiter vorzugsweise im Wesentlichen parallel zu einer Walzelementlängsachse A. Während des Festwalzens der Übergangsradien der Kurbelwelle wird eine Relativbewegung zwischen dem Walzelement 1 und dem Werkstück bzw. der Kurbelwelle 2 erzeugt, wobei die Kurbelwelle eine rotatorische Bewegung um ihre Längsachse B vollführt und auf der im Wesentlichen geradlinigen Kontaktfläche 7 des Walzelements 1 linear abrollt. Hierbei kommt es vorzugsweise insbesondere auf die Relativbewegung zwischen Werkstück 2 und Walzelement 1 an.

Gemäß einer bevorzugten erfindungsgemäßen Ausführungsform vollzieht das Walzelement 1 eine lineare Bewegung im Wesentlichen in Richtung seiner Längsachse A, wobei das Werkstück 2 bzw. die Kurbelwelle 2 eine kreisförmige bzw. rotatorische Bewegung um die Längsachse B vollführt.

Zusätzlich vollführt die Kurbelwelle 2 in einer bevorzugten erfindungsgemäßen Ausführungsform ebenfalls eine Linearbewegung in eine Richtung parallel zu der Linearbewegung des Walzelements 1. Gemäß einer weiteren bevorzugten erfindungsgemäßen Ausführungsform steht das Werkzeug bzw. Walzelement 1 still und lediglich das Werkstück 2 bzw. die Kurbelwelle 2 vollführt eine Rotationsbewegung um ihre Längsachse B sowie eine lineare Bewegung entlang der Kontaktfläche 7 des Walzelements 1.

Ferner dargestellt ist ein Stützelement 6 (s.a. Fig. 3), das gemäß einer bevorzugten erfindungsgemäßen Ausführungsform eine lineare bzw. geradlinige Kontakt- bzw. Stützfläche 8 aufweist. Vorzugsweise ist das Stützelement 6 im Wesentlichen länglich ausgebildet und entstreckt sich entlang einer Längsachse C, wobei die Stützfläche 8 vorzugsweise im Wesentlichen etwa parallel zur Längsachse C des Stützelements 6 ausgebildet ist. Wie der Draufsicht in Figur 1 zu entnehmen ist, entspricht die Breite des Stützelements 6 bzw. der Stützfläche 8 des Stützelements 6 im Wesentlichen der Breite des Lagersitzes 3 der Kurbelwelle 2.

Bei einem Festwalzvorgang gemäß einem erfindungsgemäßen Verfahren wird die Kurbelwelle 2 durch mindestens ein Stützelement 6 abgestützt, welches die durch das mindestens eine Walzelement 1 eingebrachten Festwalzkräfte aufnimmt. Hierzu liegt die Lagerfläche 4 des Lagerzapfens 3 der Kurbelwelle 2 auf einer Kontaktfläche 8 des Stützelements 6 an.

Beim Festwalzvorgang erfolgt vorzugsweise eine Linearbewegung des Stützelements 6 im Wesentlichen entlang der Längsachse C (s.a. Fig. 3). Gemäß einer bevorzugten Ausführungsform der vorliegenden Erfindung steht das Walzelement 1 während des Festwalzvorgangs fest, d.h., es vollzieht keine Linearbewegung. Über das Stützelement 6 wird durch dessen Linearbewegung, vorzugsweise im Wesentlichen entlang dessen Längsachse C bzw. dessen Kontaktfläche 7 eine Rotationsbewegung der Kurbelwelle 2 derart erzeugt, dass diese auf dem Walzelement 1 abrollt, woraus sich ebenfalls eine Linear- bzw. Längsbewegung der Kurbelwelle 2 ergibt, wobei die Übergangsradien 5 des Lagersitzes 3 der Kurbelwelle 2 auf der Kontaktfläche bzw. den Kontaktflächen 7 des bzw. der Walzelemente 7 abrollen.

Gemäß der in Figur 4 dargestellten bevorzugten erfindungsgemäßen Ausführungsform vollzieht das Walzelement 1 eine Linearbewegung in seine Längsrichtung, wodurch eine Rotationsbewegung des Lagerzapfens 3 bzw. der Kurbelwelle 2 um ihre Längsachse bewirkt wird. Die Kurbelwelle bzw. der Lagerzapfen 3 stützt sich wiederum auf zwei Stützrollenelementen 9 bzw. deren Kontaktflächen 20 ab, die auf einem Rollenstützkopf 10 vorgesehen sind. Gemäß dieser erfindungsgemäßen Ausführungsform vollzieht die Kurbelwelle 2 vorzugsweise keine Längsbewegung. Wie in Bezug auf Stützelement 6 geschildert, weisen auch die Stützelemente 9 vorzugsweise eine Breite in etwa entsprechend der Breite des Lagersitzes 3 auf. Die Stützelemente 9 sind vorzugsweise auf einem Rollenstützkopf 10 um ihre Achsen D drehbar gelagert.

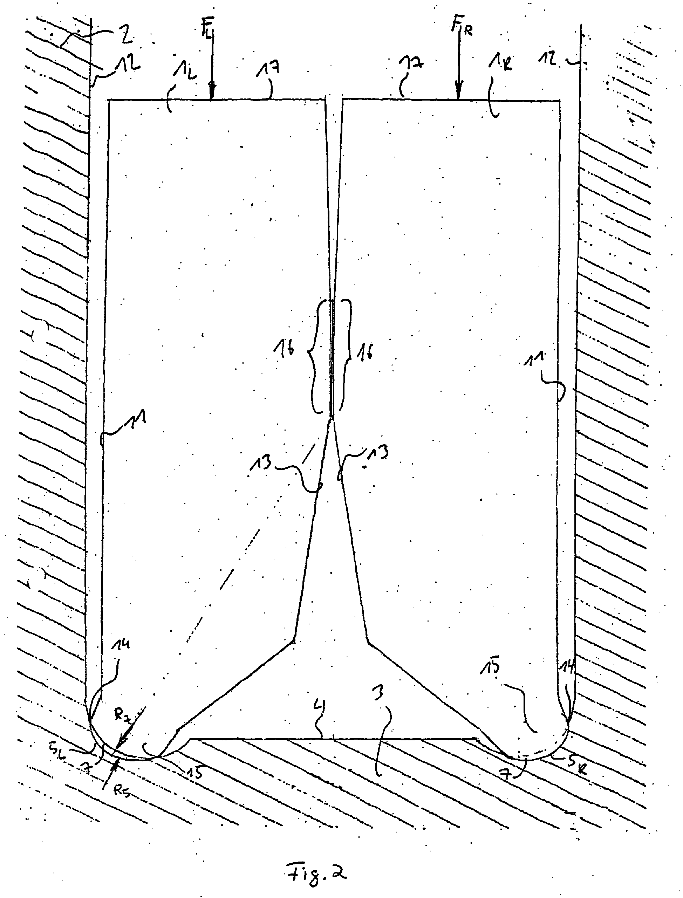

Figur 2 zeigt eine vergrößerte Ansicht zweier erfindungsgemäßer Walzelemente 1, die zur besseren Unterscheidung im Folgenden als linkes Walzelement 1_{L} und rechtes Walzelement 1_{R} bezeichnet werden. Diese Unterscheidung betrifft jedoch lediglich die Anordnung der Walzelemente in Bezug auf entsprechende linke bzw. rechte Übergangsradien 5_{L}, 5_{R} von Lagerzapfen 3 einer Kurbelwelle 2, von denen der linke Übergangsradius in der Zeichnung als 5_{L} und der rechte als 5_{R} bezeichnet ist.

Gemäß der beispielhaften bevorzugten Ausführungsform gemäß Figur 2 die im Wesentlichen der in Figur 1 gezeigten entspricht, weist ein erfindungsgemäßes Walzelement 1 (hier 1_{L}, 1_{R},) eine im Wesentlichen geradlinige Kontaktfläche 7 zum Anbringen mindestens einer Festwalzkraft in eine Kurbelwelle 2 auf. Die Kontaktfläche 7 ist hierbei im Wesentlichen geradlinig ausgebildet, d.h. sie erstreckt sich im Wesentlichen entlang der Längsachse A (hier A_{L}, A_{R}) des Walzelements 1 (hier 1_{L}, 1_{R}).

Das Profil der Kontaktfläche 7 eines Walzelements 1 gemäß der vorliegenden Erfindung in einer Draufsicht gemäß Figur 2, also quer zur Längsachse A bzw. quer zur geradlinigen Erstreckung der Kontaktfläche 7, entspricht im Wesentlichen der geometrischen Ausbildung des Lagersitzes 5 (hier 5_{L}, 5_{R}) bzw. korrespondiert zu dieser. Hierbei kann vorzugsweise auch auf in Stand der Technik bekannte Geometrien zurückgegriffen werden.

Vorzugsweise weist eine Kontaktfläche 7 eines erfindungsgemäßen Walzelements 1 einen Radius auf, der im Wesentlichen dem Übergangsradius des Lagerzapfens der Kurbelwelle entspricht. Gemäß einer bevorzugten Ausführungsform ist der Radius der Kontaktfläche 7 gleich oder kleiner dem entsprechenden Kurbelwellenradius. Gemäß einer bevorzugten Ausführungsform liegt der Radius R₇ der Kontaktfläche 7 im Bereich von/zwischen etwa 0,5mm bis/und etwa 5mm, vorzugsweise von/zwischen etwa 1mm bis/und etwa 3mm und besonders bevorzugt von/zwischen etwa 1,5mm bis/und etwa 2mm. Gemäß einer besonders bevorzugten erfindungsgemäßen Ausführungsform beträgt der Radius R₇ etwa 1,5mm für einen Übergangsradius R₅ von etwa 2mm.

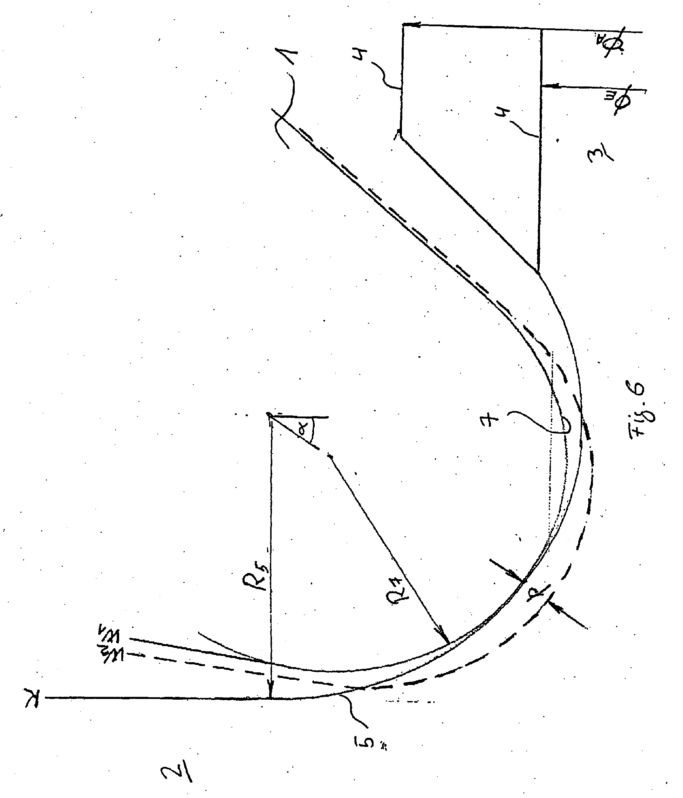

Figur 6 zeigt eine vergrößerte schematische Darstellung eines Ausschnitts einer Draufsicht auf ein erfindungsgemäßes Walzelement 1 im Bereich der Kontaktfläche 7 während bzw. vor und nach der Bearbeitung einer Kurbelwelle 2 (s.a. Figuren 1 und 2). Die ununterbrochene Linie W₁ zeigt die Position des Werkzeugs 1 bzw. dessen Kontaktfläche 7 vor dem Festwalzen. In der gezeigten beispielhaften bevorzugten Ausführungsform weist die Kontaktfläche 7 einen Radius R₇ von etwa 1,5mm auf. Die gestrichelte Linie W₂ zeigt die Position des Werkzeugs 1 bzw. dessen Kontaktfläche 7 nach dem Festwalzen. Auch nach dem Festwalzvorgang weist die Kontaktfläche 7 einen Radius R₇ von etwa 1,5mm auf.

Die ununterbrochene Linie K repräsentiert die Kontur der Kurbelwelle 2 einschließlich des Übergangsradius 5. In der gezeigten beispielhaften bevorzugten Ausführungsform weist die Kurbelwelle 2 im Bereich des Übergangsradius 5 einen Radius R₅ von etwa 2mm auf.

Der beispielhafte Durchmesser des Lagersitzes 4 vor einer Schleifbearbeitung desselben (ggf. vor und nach dem Festwalzen) ist in Figur 6 als Durchmesser ØA bezeichnet. Der beispielhafte Durchmesser des Lagersitzes 4 nach einer Schleifbearbeitung, also das Endmaß des Lagersitzes 4, ist in Figur 6 als Durchmesser ØE bezeichnet. Die beiden dargestellten Durchmesser ØA und ØE stellen beispielhafte Extremfälle des Lagersitzdurchmesser vor bzw. nach der Schleifbearbeitung dar, bezogen auf die Exzentrizität des Lagers als Folge von bspw. Bearbeitungs- oder Fertigungstoleranzen. Die Maximale Differenz zwischen dem Durchmesser ØA vor der Schleifbearbeitung und dem Durchmesser ØE nach der Schleifbearbeitung beträgt beispielsweise etwa 0,8 bis 0,9 mm.

Der Abstand p in Figur 6 ist die Verformung der Übergangsradius 5 als Folge der Festwalzoperation. Nach dem Festwalzen ist demnach die Kontur, wie als Linie K dargestellt, der Kurbelwelle 2 im Bereich des Übergangsradius 5 verändert und entspricht im Wesentlichen der Kontur der Kontaktfläche 7 des Werkzeugs 1 in der Position nach dem Festwalzen gemäß Darstellung der Linie W₂. Der Abstand p liegt vorzugsweise im Bereich von/zwischen etwa 0,05mm bis/und etwa 0,5mm und beträgt bevorzugt etwa 0,2mm. Wie in Figur 6 dargestellt, beträgt der Winkel α des Vektors der Walzkraft zur Senkrechten auf die Lagerfläche, die durch das Walzelement 1 über die Kontaktfläche 7 in das Werkstück 2 eingebracht wird vorzugsweise etwa 25° bis 45°, besonders bevorzugt etwa 30° bis 35°. Dies ist vorzugsweise insbesondere vorteilhaft, um Druckeigenspannungen ersten Grades in die richtige Zone einzubringen und/oder um Eigenspannungen dritten Grades abzubauen und dadurch eine bessere, in Richtung idealer Kristallstruktur, Kristallstruktur zu erreichen.

Wie in Figur 2 dargestellt, weist ein erfindungsgemäßes Werkzeug vorzugsweise zwei Seitenbereiche auf, von denen der erste Seitenbereich 11 im Einsatz einer Flanke 12 der Kurbelwelle 2 zugewandt ist. Der zweite Seitenbereich 13 liegt auf der sich vom zu bearbeitenden Übergangsradius 5 erstreckenden Flanke 12 der Kurbelwelle 12 abgewandten Seite. Vorzugsweise ist der Seitenbereich 11 gegenüber dem zu bearbeitenden Übergangsradius 5 bzw. gegenüber dem Kontaktflächenbereich 7 zurückversetzt, um eine Kollisionsgefahr des Seitenbereichs 11 mit der Flanke 12 der Kurbelwelle zu minimieren.

Dies wird gemäß einer bevorzugten Ausführungsform durch einen seitlichen Versatz zwischen einem äußeren Bereich 14 der Kontaktfläche 7 und dem Seitenflächenbereich 11 gewährleistet, der beispielsweise durch die Ausbildung der Kontaktfläche 7 in einem vorstehendem Bereich 15 (vergleiche Figur 2) und/oder durch eine gegenüber der Flanke 12 der Kurbelwelle geneigten Ausbildung des Seitenbereichs 11 (vergleiche Figur 1) gewährleistet wird.

Gemäß einer bevorzugten erfindungsgemäßen Ausführungsform weist das Walzelement einen zweiten Seitenbereich 13 auf, der zur Anlage an einem zweiten Walzelement ausgebildet ist.

Gemäß einer bevorzugten erfindungsgemäßen Ausführungsform weist der Seitenflächenbereich 13 eine im Wesentlichen konvexe Ausbildung auf, die einen Anlagebereich 16 ausbildet.

Dies ermöglicht eine erfindungsgemäße Anordnung zweier Walzelemente 1_{L}, 1_{R} gemäß der Darstellung in Figur 1 bzw. Figur 2. Durch das Vorsehen zweier erfindungsgemäßer Walzelemente 1_{L}, 1_{R} wird ein gleichzeitiges Bearbeiten zweier gegenüberliegender Übergangsradien 5 eines Lagersitzes 3 einer Kurbelwelle 2 ermöglicht. Das Einleiten der Wälzkräfte in das erfindungsgemäße Walzelement 1 erfolgt über geeignete Mittel in einen Krafteinleitungsbereich 17, der vorzugsweise im Wesentlichen in dem der Kontaktfläche 7, bezogen auf die Längsachse des Walzelements 1, gegenüberliegenden Bereich des Walzelements 1 vorgesehen ist.

Bei der dargestellten Bearbeitung bzw. bei der dargestellten gleichzeitigen Bearbeitung zweier Übergangsradien 5_{L}, 5_{R} erlaubt die vorliegende Erfindung das Vorsehen zweier, vorzugsweise unabhängiger, Festwalzkräfte F_{L}, F_{R} jeweils in das Walzelement 1_{L}, 1_{R}. Dies erlaubt vorzugsweise die genaue Abstimmung der erforderlichen Festwalzkraft für den jeweiligen Übergangsradius 5_{L} bzw. 5_{R}. Dies erlaubt wiederum eine optimale Einstellung der Festwalzkräfte für den einzelnen Bearbeitungsfall, wie er beispielsweise durch Fertigungsungenauigkeiten bei der vorrangegangenen Bearbeitung der Übergangsradien notwendig werden kann. Hierbei sind die Kräfte F_{L} und F_{R} vorzugsweise unabhängig voneinander einstellbar.

Der Kontaktbereich 16 im Seitenbereich 13 des erfindungsgemäßen Walzelements 1 ist vorzugsweise derart ausgebildet, dass er eine automatische Winkeleinstellung der Kontaktfläche 7 in Bezug auf den Übergangsradius 5 erlaubt. Dies erweist sich vorzugsweise insbesondere bei Fertigungsungenauigkeiten der Kurbelwelle bzw. bei sich durch die Festwalzbearbeitung ändernden Abstände der Übergangsradien 5_{L}, 5_{R}, zueinander als vorteilhaft.

Vorzugsweise ist die Ausbildung der Geometrie des Querschnitts des Walzelements 1 abhängig von den Rahmenbedingungen des Einzelfalls, wobei es insbesondere auf die Ausbildung einer im Wesentlichen geradlinigen Kontaktfläche ankommt. Die Querschnittsform eines bevorzugten Walzelements (vgl. Fig. 1, 2) ist im Wesentlichen rechteckig, dreieckig oder oval.

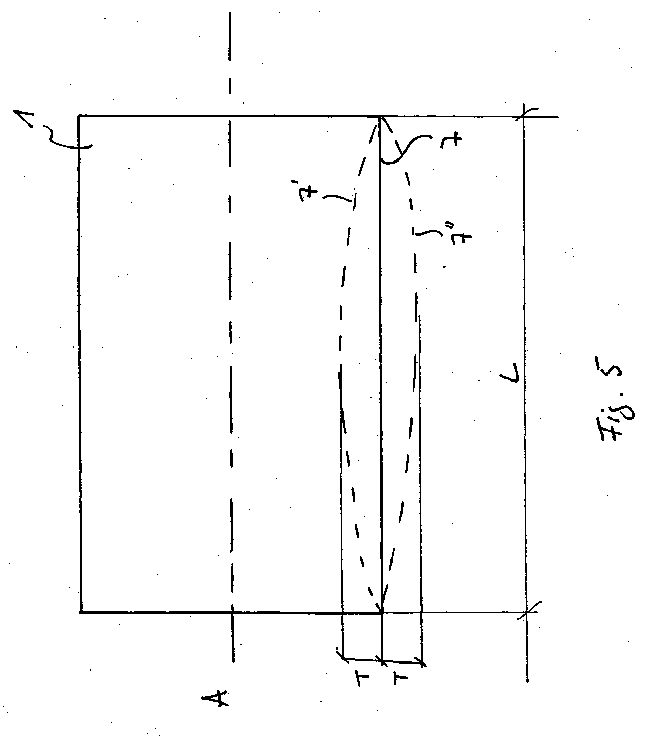

Wie der Seitenansicht eines erfindungsgemäßen Werkzeugs bzw. Walzelements 1 gemäß Figur 5 zu entnehmen ist, weist das Walzelement 1 vorzugsweise eine im Wesentlichen längliche Form auf und erstreckt sich entlang einer Längsachse A. Die Kontaktfläche 7 des Walzelements 1 ist vorzugsweise geradlinig ausgebildet und erstreckt sich im Wesentlichen vorzugsweise parallel zur Längsachse A des Werkzeugs 1. Von Bedeutung ist jedoch vorzugsweise lediglich, dass sich die Kontaktfläche 7 während der Bearbeitung eines Übergangsradius einer Kurbelwelle derart in Kontakt mit der Kurbelwelle befindet, dass die erforderliche Festwalzkraft F in die Kurbelwelle eingebracht werden kann. Eine erfindungsgemäße Vorrichtung zum Festwalzen der Übergangsradien von Kurbelwellen weist hierzu geeignete Mitteil bzw. Einrichtungen auf, die eine entsprechende Führung bzw. Anpresskraft des Walzelements bewirken. Gemäß einer bevorzugten erfindungsgemäßen Ausführungsform ist die erfindungsgemäße Vorrichtung derart eingerichtet, bzw. wird das erfindungsgemäße Verfahren derart ausgeführt, dass die lineare Bewegung des Walzelements 1 im Wesentlichen parallel bzw. in Richtung der Ausrichtung der Kontaktfläche 7 erfolgt.

Wie der schematischen Darstellung gemäß Figur 5 zu entnehmen ist, kann die Kontaktfläche 7 des erfindungsgemäßen Walzelements in der Seitenansicht desselben zumindest teilweise konkav und/oder konvex ausgebildet sein. Dies ist durch die gestrichelten Linien 7' bzw. 7" in Figur 5 angedeutet. Vorzugsweise ist die Kontaktfläche 7 des Walzelements 1 nicht kreisförmig bzw. nicht rotationssymmetrisch ausgebildet.

Die Kontaktfläche des Walzelements weist vorzugsweise eine Länge L von/zwischen etwa 0,1m bis/und etwa 5m, vorzugsweise von/zwischen etwa 0,3m bis/und etwa 2m besonders bevorzugt von/zwischen etwa 0,5m bis/und etwa 1,5m und weiter bevorzugt von etwa 1m auf.

Das Verhältnis der Länge der Kontaktfläche 7 zur Differenz zwischen den zwei Extrempunkten der Kontaktfläche bezogen auf die Richtung senkrecht bzw. im Wesentlichen senkrecht zur Längsachse A des Werkzeugs, hier als T bezeichnet ist vorzugsweise, insbesondere bei geradliniger Ausbildung der Kontaktfläche 7, gegen unendlich. Gemäß weiterer bevorzugter erfindungsgemäßer Ausführungsformen liegt das Verhältnis von L zu T im Bereich von/zwischen etwa 4/1 und unendlich, weiter bevorzugt von/zwischen etwa 8/1 bis/und 1000/1, weiter bevorzugt von/zwischen 20/1 bis/und 500/1, ferner bevorzugt von/zwischen 30/1 bis/und 100/1 und weiter bevorzugt von/zwischen etwa 50/1 bis/und 50/1.

Vorzugsweise wird durch die Länge L der geradlinigen Kontaktfläche 7 eine besonders lange Standzeit des erfindungsgemäßen Werkzeugs erreicht. Insbesondere kommt durch das Abrollen des zu bearbeitenden Übergangsradius 5 auf der Kontaktfläche 7 jede Stelle der Kontaktfläche 7 nur eine begrenzte Anzahl von Malen mit dem Übergangsradius 5 in Verbindung. Die Abnutzung des Werkzeugs verhält sich dementsprechend gering. Daraus resultiert vorzugsweise eine verlängerte Standzeit des Werkzeuges, was eine Verringerung der beispielsweise durch Werkzeugwechsel etc. bedingten Stillstandzeiten der Festwalzvorrichtung und somit zu einer Zeit- und Kosteneinsparung bei der Bearbeitung von Kurbelwellen führt. Weiterhin kommt eine Beschädigung am Übergangsradius 5 und/oder der Kontaktfläche 7 nur eine begrenzte Anzahl von Malen pro Bearbeitungsgang mit der entsprechend gegenüberliegenden Fläche, nämlich der Kontaktfläche 7 oder der Oberfläche des Übergangsradius 5 in Verbindung, was zu einer Verringerung des negativen Einflusses entsprechender Beschädigungen auf das Werkstück und/oder Werkzeug führt.

Vorzugsweise erfolgt die Bearbeitung gemäß einem erfindungsgemäßen Verfahren durch sich wiederholende bzw. alternierende lineare Relativbewegungen zwischen Werkstück und Werkzeug. Vorzugsweise bewirkt eine komplette Überwalzbewegung des Werkzeugs über das Werkstück (hin und zurück) bei einer Werkzeug- bzw. Kontaktflächenlänge von etwa 1m und einem bearbeiteten Kurbelwellenlagersitz mit einem Durchmesser von etwa 50mm eine Überwalzungszahl von etwa 12 (die Kurbelwelle rotiert 12 Mal, macht also 12 Umdrehungen, davon je 6 pro Werkzeughub, also einer Hin- oder Zurückbewegung). Wie oben diskutiert kann die Relativbewegung zwischen Werkzeug und Werkstück durch das Werkzeug selbst und/oder durch das Stützelement erzeugt werden. Vorzugsweise bedarf es etwa 1 bis 6 kompletter Überwalzbewegungen relativ zwischen Werkzeugs und Werkstück. Eine größere Anzahl der Übergänge pro Bearbeitungsgang resultiert vorzugsweise in einem verringerten Kraftaufwand pro Übergang was wiederum zu einer Verbesserung der Festwalzfestigkeit der bearbeiteten Kurbelwelle führt. Dies ist insbesondere bei Kurbelwellen zur Verwendung in Dieselmotoren mit hohen Drehmomenten vorteilhaft. Vorzugsweise erfolgen 2 komplette Überwalzbewegungen relativ zwischen Werkzeugs und Werkstück. Bei für die Verwendung in Dieselmotoren vorgesehenen Kurbelwellen erfolgen vorzugsweise etwa 3 bis 4 komplette Überwalzbewegungen relativ zwischen Werkzeugs und Werkstück mit einer reduzierten Festwalzkraft.

## Patentansprüche

1. Verfahren zum Festwalzen der Übergangsradien von Kurbelwellen aufweisend die Schritte
Bereitstellen mindestens eines Walzelements zum Einbringen mindestens einer Kraft in das Werkstück;
Bereitstellen mindestens eines Stützelements zum Stützen des Werkstücks gegen eine durch ein Walzelement eingebrachte Kraft;
Bewegen des mindestens einen Walzelements und/oder des mindestens einen Stützelements derart, daß das mindestens eine Stützelement und/oder das mindestens eine Walzelement relativ zueinander und/oder relativ zu einem Werkstück eine Bewegung ausführen, **dadurch gekennzeichnet daß** diese Bewegung eine Linearkomponente aufweist.

2. Verfahren nach Anspruch 1, wobei die Relativbewegung zwischen dem mindestens einen Stützelement und dem mindestens einen Walzelement im Wesentlichen eine Linearkomponente umfaßt bzw. im Wesentlichen aus einer Linearkomponente besteht.

3. Verfahren nach Anspruch 1 oder 2, wobei sich das mindestens eine Stützelement und das mindestens eine Walzelement entlang der Linearkomponente in entgegengesetzte Richtungen bewegen.

4. Verfahren nach einem der Ansprüche 1, 2 oder 3, wobei das zwischen dem mindestens einen Stützelement und dem mindestens einen Walzelement angeordnete Werkstück eine Bewegung mit einer Rotationskomponente ausführt.

5. Verfahren nach einem der vorangegangenen Ansprüche, wobei das zwischen dem mindestens einen Stützelement und dem mindestens einen Walzelement angeordnete Werkstück eine Bewegung mit einer Rotationskomponente und einer Linearkomponente ausführt.

6. Verfahren nach einem der vorangegangenen Ansprüche, umfassend den Schritt des Bewegens des mindestens einen Walzelements und/oder des mindestens einen Stützelements entlang eines Wegs mit einer Linearkomponente und einer Rotationskomponente, wobei die Linearkomponente vorzugsweise größer und besonders bevorzugt wesentlich größer ist als die Rotationskomponente.

7. Verfahren nach einem der vorangegangenen Ansprüche, wobei das mindestens eine Walzelement und/oder das mindestens eine Stützelement nicht um die eigene Achse rotieren.

8. Walzelement zum Festwalzen der Übergangsradien von Kurbelwellen, insbesondere gemäß einem Verfahren nach einem der Ansprüche 1 bis 7, **dadurch gekennzeichnet, daß** des Walzelement eine im wesentlichen geradlinige Kontaktfläche zum Einbringen mindestens einer Festwalzkraft in eine Kurbelwelle, auf weist.

9. Walzelement nach Anspruch 8, wobei sich die im wesentlichen geradlinige Kontaktfläche des Walzelements in einer Längsrichtung des Walzelements erstreckt und entlang dieser Längsrichtung zumindest teilweise konkav und/oder konvex ausgebildet ist.

10. Walzelement nach Anspruch 8 oder 9, wobei die Kontaktfläche des Walzelements nicht kreisförmig ausgebildet ist.

11. Walzelement nach Anspruch 8, 9 oder 10, wobei die Kontaktfläche des Walzelements eine Länge von etwa 0,1m bis etwa 5m, vorzugsweise von etwa 0,3m bis etwa 2m, besonders bevorzugt von etwa 0,5m bis etwa 1,5m und mehr bevorzugt von etwa 1 m aufweist.

12. Walzelement nach einem der Ansprüche 8 bis 11, wobei die Kontaktfläche des Walzelements einen Festwalzradius von etwa 0,5mm bis etwa 5mm, vorzugsweise von etwa 1mm bis etwa 3mm und besonders bevorzugt von etwa 1,5mm bis etwa 2mm aufweist.

13. Vorrichtung mit einem Walzelement nach einem der Ansprüche 8 bis 12 zum Verfestigen von Werkstücken gemäß einem Verfahren nach einem der Ansprüche 1 bis 7.

14. Vorrichtung zum Festwalzen der Übergangsradien von Kurbelwellen, insbesondere gemäß einem Verfahren nach einem der Ansprüche 1 bis 7, mit einem Walzelement nach einem der Ansprüche 8 bis 13.

15. Vorrichtung zum Festwalzen der Übergangsradien von Kurbelwellen, insbesondere gemäß den Ansprüchen 13 und 14, mit mindestens einem Walzelement zum Einbringen mindestens einer Festwalzkraft in das Werkstück und mindestens einem Stützelement zum Stützen des Werkstücks gegen die durch das Walzelement eingebrachte Kraft, wobei das mindestens eine Walzelement und/oder das mindestens eine Stützelement derart ausgebildet ist, daß es eine im Wesentlichen geradlinige Kontaktfläche zum Einbringen der mindestens einen Festwalzkraft in die Kurbelwelle bzw. zum Stützen des Werkstücks aufweist.

16. Vorrichtung nach einem der Ansprüche 13 bis 15, wobei die Vorrichtung Mittel aufweist, um zwischen dem mindestens einen Walzelement und dem Werkstück und/oder mindestens einen Stützelement eine Relativbewegung mit einer Linearkomponente zu erzeugen.

17. Vorrichtung nach einem der Ansprüche 13 bis 16, wobei die Vorrichtung Mittel aufweist, um zwischen dem mindestens einen Walzelement und dem Werkstück und/oder dem mindestens einen Stützelement eine Relativbewegung zu erzeugen, die im Wesentlichen eine Linearkomponente umfaßt bzw. im Wesentlichen aus einer Linearkomponente besteht.

18. Vorrichtung nach einem der Ansprüche 13 bis 17, wobei die Vorrichtung Mittel aufweist, um das mindestens eine Walzelement und das mindestens eine Stützelement entlang einer Linearkomponente relativ in entgegengesetzte Richtungen bewegen.

19. Vorrichtung nach einem der Ansprüche 13 bis 18, wobei die Vorrichtung derart ausgebildet ist, daß ein zwischen dem mindestens einen Walzelement und dem mindestens einen Stützelement angeordnetes Werkstück eine Bewegung mit einer Rotationskomponente ausführt.

20. Vorrichtung nach einem der Ansprüche 13 bis 19, wobei die Vorrichtung derart ausgebildet ist, daß ein zwischen dem mindestens einen Walzelement und dem mindestens einen Stützelement angeordnetes Werkstück eine Bewegung mit einer Rotationskomponente und einer Linearkomponente ausführt.

21. Vorrichtung nach einem der Ansprüche 14 bis 20, wobei die Vorrichtung Mittel aufweist, um das mindestens eine Walzelement und/oder das mindestens eine Stützelement entlang eines Wegs mit einer Linearkomponente und einer Rotationskomponente zu bewegen, wobei die Linearkomponente vorzugsweise größer und besonders bevorzugt wesentlich größer ist als die Rotationskomponente.

22. Vorrichtung nach einem der Ansprüche 13 bis 21, wobei das mindestens eine Walzelement und/oder das mindestens eine Stützelement nicht um die eigene Achse rotierbar ist/sind.

## Claims

1. Method for roll-solidifying the transition radiuses of crankshafts comprising the steps of
providing at least one roller element for introducing at least one force into the work piece;
providing at least one support element for supporting the work piece against a force introduced by a roller element;
moving the at least one roller element and/or the at least one support element in such a manner that the at least one support element and/or the at least one roller element perform a movement relative to each other and/or relative to a work piece, **characterized in that** said movement comprises a linear component.

2. The method according to claim 1, wherein the relative movement between the at least one support element and the at least one roller element essentially comprises a linear component or essentially consists of a linear component.

3. The method according to claim 1 or 2, wherein the at least one support element and the at least one roller element move in opposite directions along the linear component.

4. The method according to any one of claims 1, 2 or 3, wherein the work piece arranged between the at least one support element and the at least one roller element performs a movement comprising a rotational component.

5. The method according to any one of the preceding claims, wherein the work piece arranged between the at least one support element and the at least one roller element performs a movement comprising a rotational component and a linear component.

6. The method according to any one of the preceding claims comprising the step of moving the at least one roller element and/or the at least one support element along a path with a linear component and a rotational component, wherein the linear component is preferably greater and particularly preferred substantially greater than the rotational component.

7. The method according to any one of the preceding claims, wherein the at least one roller element and/or the at least one support element do not rotate around their own axis.

8. A roller element for roll-solidifying the transition radiuses of crankshafts particularly according to a method according to any one of claims 1 to 7, **characterized in that** said roller element comprises an essentially straight contact surface for introducing at least one roll-solidifying force into a crankshaft.

9. The roller element according to claim 8, wherein the essentially straight contact surface of the roller element extends in a longitudinal direction of the roller element and has at least partially a concave and/or convex shape along said longitudinal direction.

10. The roller element according to claim 8 or 9, wherein the contact surface of the roller element does not have a circular shape.

11. The roller element according to claim 8, 9 or 10, wherein the contact surface of the roller element has a length of about 0.1 m to about 5 m, preferably of about 0,3 m to about 2 m, particularly preferably of about 0.5 m to about 1.5 m and more preferably of about 1m.

12. The roller element according to any one of claims 8 to 11, wherein the contact surface of the roller element comprises a radius for roll-solidifying of about 0.5 mm to about 5 mm, preferably of about 1 mm to about 3 mm and particularly preferably of about 1.5 mm to about 2 mm.

13. A device having a roller element according to any one of claims 8 to 12 for solidifying work pieces according to a method according to any one of claims 1 to 7.

14. A device for roll-solidifying the transition radiuses of crankshafts, particularly according to a method according to any one of claims 1 to 7 having a roller element according to any one of claims 8 to 13.

15. A device for roll-solidifying the transition radiuses of crankshafts particularly according to claims 13 and 14 having at least one roller element for introducing at least one roll-solidifying force into the workpiece and at least one support element for supporting the work piece against the force introduced by the roller element, wherein the at least one roller element and/or the at least one support element is formed in a manner that it comprises an essentially straight contact surface for introducing the at least one roll-solidifying force into the crankshaft or for supporting the work piece.

16. The device according to any one of claims 13 to 15, wherein the device comprises means for generating a relative movement having a linear component between the at least one roller element and the work piece and/or the at least one support element.

17. The device according to any one of claims 13 to 16, wherein the device comprises means for generating a relative movement between the at least one roller element and the work piece and/or the at least one support element, the relative movement essentially comprising a linear component or essentially consisting of a linear component.

18. The device according to any one of claims 13 to 17, wherein the device comprises means for relatively moving the at least one roller element and the at least one support element in opposite directions along a linear component.

19. The device according to any one of claims 13 to 18, wherein the device is configured in such a manner that a work piece arranged between the at least one roller element and the at least one support element performs a movement comprising a rotational component.

20. The device according to any one of claims 13 to 19, wherein the device is configured in such a manner that a work piece arranged between the at least one roller element and the at least one support element performs a movement comprising a rotational component and a linear component.

21. The device according to any one of claims 14 to 20, wherein the device comprises means for moving the at least one roller element and/or the at least one support element along a path having a linear component and a rotational component wherein the linear component is preferably greater and particularly preferably substantially greater than the rotational component.

22. The device according to any one of claims 13 to 21, wherein the at least one roller element and/or the at least one support element cannot be rotated around their own axes.

## Revendications

1. Procédé pour la consolidation par galetage de rayons de transition de vilebrequins, présentant les étapes consistant à :
mettre à disposition au moins un élément de galetage pour l'introduction d'au moins une force dans la pièce à usiner ;
mettre à disposition au moins un élément de support pour supporter la pièce à usiner contre une force introduite par un élément de galetage ;
déplacer le au moins un élément de galetage et/ou le au moins un élément de support de telle sorte que le au moins un élément de support et/ou le au moins un élément de galetage effectuent un mouvement l'un par rapport à l'autre et/ou par rapport à une pièce à usiner
**caractérise en ce que** ledit mouvement présente une composante linéaire.

2. Procédé selon la revendication 1, dans lequel le mouvement relatif entre le au moins un élément de support et le au moins un élément de galetage comprend essentiellement une composante linéaire ou consiste essentiellement en une composante linéaire.

3. Procédé selon la revendication 1 ou 2, dans lequel le au moins un élément de support et le au moins un élément de galetage se déplacent le long de la composante linéaire dans des directions opposées.

4. Procédé selon l'une des revendications 1, 2 ou 3, dans lequel la pièce à usiner disposée entre le au moins un élément de support et le au moins un élément de galetage effectue un mouvement avec une composante de rotation.

5. Procédé selon l'une des revendication précédentes, dans lequel la pièce à usiner disposée entre le au moins un élément de support et le au moins un élément de galetage effectue un mouvement avec une composante de rotation et une composante linéaire.

6. Procédé selon l'une des revendications précédentes, comprenant l'étape de déplacement du au moins un élément de galetage et/ou du au moins un élément de support le long d'un trajet avec une composante linéaire et une composante de rotation, dans lequel la composante linéaire est, de préférence, supérieure et, de façon particulièrement préférée, sensiblement supérieure à la composante de rotation.

7. Procédé selon l'une des revendications précédentes, dans lequel le au moins un élément de galetage et/ou le au moins un élément de support ne tournent pas autour de leur axe propre.

8. Elément de galetage pour la consolidation des rayons de transition de vilebrequin, en particulier selon un procédé défini dans l'une des revendications 1 à 7,
**caractérise en ce que** ledit mouvement ledit élément de galetage présente une surface de contact sensiblement linéaire pour l'introduction d'au moins une force de galetage dans un vilebrequin.

9. Elément de galetage selon la revendication 8, dans lequel la surface de contact sensiblement linéaire de l'élément de galetage s'étend dans une direction longitudinale de l'élément de galetage et le long de cette direction longitudinale est configurée de façon au moins partiellement concave et/ou convexe.

10. Elément de galetage selon l'une des revendications 8 ou 9, dans lequel la surface de contact de l'élément de galetage n'est pas de configuration circulaire.

11. Elément de galetage selon la revendication 8, 9 ou 10, dans lequel la surface de contact de l'élément de galetage présente une longueur d'environ 0,1 m jusau'à environ 5 m, de préférence d'environ 0,3 m jusqu' à environ 2 m, de façon particulièrement préférée d'environ 0,5 m jusqu'à environ 1,5 m, et de façon la plus préférée d'environ 1 m.

12. Elément de galetage selon l'une des revendications 8 à 11, dans lequel la surface de contact de l'élément de galetage présente un rayon d'environ 0,5 mm jusqu'à environ 5 mm, de préférence d'environ 1 mm jusqu'à environ 3 mm, et de façon particulièrement préférée d'environ 1, 5 mm jusqu' à environ 2 mm.

13. Dispositif comprenant un élément de galetage selon l'une des revendications 8 à 12, pour la consolidation par galetage de pièces selon un procédé défini dans les revendications 1 à 7.

14. Dispositif pour la consolidation par galetage des rayons de transition de vilebrequins, en particulier selon un procédé défini dans l'une des revendications 1 à 7 avec un élément de galetage selon l'une des revendications 8 à 13.

15. Dispositif pour la consolidation par galetage des rayons de transition de vilebrequins, en particulier selon les revendications 13 et 14, avec au moins un élément de galetage pour l'introduction d'au moins une force de galetage dans la pièce à usiner et au moins un élément de support pour le support de la pièce à usiner contre la force introduite par l'élément de galetage, dans lequel le au moins un élément de galetage et/ou le au moins un élément de support sont configurés de telle sorte à présenter une surface de contact sensiblement linéaire pour l'introduction de la au moins une force de galetage dans le vilebrequin ou pour le support de la pièce à usiner.

16. Dispositif selon l'une des revendications 13 à 15, dans lequel le dispositif présente des moyens pour produire, entre le au moins un élément de galetage et la pièce à usiner et/ou au moins un élément de support, un mouvement relatif avec une composante linéaire.

17. Dispositif selon l'une des revendications 13 à 16, dans lequel le dispositif présente des moyens pour produire, entre le au moins un élément de galetage et la pièce à usiner et/ou le au moins un élément de support, un mouvement relatif qui comprend essentiellement une composante linéaire ou qui consiste sensiblement en une composante linéaire.

18. Dispositif selon l'une des revendications 13 à 17, dans lequel le dispositif présente des moyens pour déplacer le au moins un élément de galetage et le au moins un élément de support le long d'une composante linéaire relativement dans des directions opposées.

19. Dispositif selon l'une des revendications 13 à 18, dans lequel le dispositif est configuré de telle sorte qu'une pièce à usiner entre le au moins un élément de galetage et le au moins un élément de support effectue un mouvement avec une composante de rotation.

20. Dispositif selon l'une des revendications 13 à 19, dans lequel le dispositif est configuré de telle sorte qu'une pièce à usiner située entre le au moins un élément de galetage et le au moins un élément de support effectue un mouvement avec une composante de rotation et une composante linéaire.

21. Dispositif selon l'une des revendications 14 à 20, dans lequel le dispositif présente des moyens pour déplacer le au moins un élément de galetage et/ou le au moins un élément de support le long d'un trajet avec une composante linéaire et une composante de rotation, dans lequel la composante linéaire est, de préférence, supérieure et, de façon particulièrement préférée, sensiblement supérieure à la composante de rotation.

22. Dispositif selon l'une des revendications 13 à 21, dans lequel le au moins un élément de galetage et/ou le au moins un élément de support ne sont pas rotatifs autour de leur propre axe.
